# EUROPEAN PATENT APPLICATION

(11) **EP 1 195 952 A1**
(43) Date of publication of application: **10.04.2002**
(21) Application number: 00121948.4
(22) Date of filing: 09.10.2000
(51) Int. Cl.: H04L 12/56

(54) **A method for congestion control within an IP-subnetwork**

(71) Applicant: SIEMENS AKTIENGESELLSCHAFT, 80333 München (DE)
(72) Inventor: Koester, Gerta, Dr., 81543 München (DE)

(57) **Abstract**

The invention solves the problem of congestion in routers and on links.

The neighbors of an overloaded router are informed as soon as overload occurs. They are told to take actions in order to relieve the overloaded switch. Possible actions are described.

## Description

### 1. Which technical problem does the invention attempt to solve?

Short term congestion in routers and on links.

### 2. How has this problem been solved so far?

Attempt to avoid congestion by trying to foretell traffic loads and planning the network accordingly. The approach is not adaptive and hence not suitable for short term load fluctuations or load fluctuations that cannot be foretold.
As a consequence, the whole problem is avoided by hugely over-dimensioning the network.

### 3. In which way does the invention solve the technical problem described above?

The neighbors of an overloaded router are informed as soon as overload occurs. They are told to take actions in order to relieve the overloaded switch. Possible actions are described.

The method is adaptive, that is, it can adapt to different load situations without having to foretell them.

The method reacts fast.

The system returns to its original state as soon as the congestion disappears. That is, routes remain unchanged.

The invention establishes very simple communication between routers.

The invention provides a mechanism for adaptive congestion control in IP-networks. That is, a congestion control that adapts dynamically and very quickly to various load situations. The advantages of dynamic congestion control are well known from classical telephony networks. However, they cannot be simply transfered to IP-networks, because the IP-protocol is not built to incorporate such mechanisms. Innovative add-ons such as this invention are necessary to incorporate dynamic congestion control.

The following steps allow to achieve our goal:
- Detect and evaluate overload at each router. E.g. with the help of congestion levels.
- Generate a very simple exchange of information between an overloaded router and its neighbors. This is achieved by combining existing protocol modules and by using exploiting messages.
- Generate a mechanism to interpret the congestion information. The mechanism uses ideas from a mechanism from classical telephony networks ([1], [2]).
- Generate a mechanism to reduce overload as a reaction to the - correctly interpreted - information. Traffic is redirected along formerly established alternative paths (no rerouting!). This is achieved by using existing protocol modules.

The four steps described above combine to an adaptive algorithm that reacts very quickly and dynamically to changing load situations. The exchange and interpretation of information are independent of the network topology. The only part of the algorithm that depends on routing information are the actual actions to reduce overload. These must be adapted when the network topology changes. Hence the algorithm is completely dynamic as long as the network remains unchanged.

Thus the invention is suitable to bring under control short term load fluctuations. With short term load fluctuations time consuming "rerouting" is not possible. Also "rerouting" is not desirable in such a situation which is not of long duration.

The invention and their implementation will become more apparent from the following detailed description and accompanying drawings.

### Deploying an MPLS system for Automatic Congestion Control in IP-Networks

### 1 Traffic Engineering in IP Networks - Current Status

### 1.1 End-to-end Congestion Control with TCP

Among the properties we associate with IP-networks are
- simplicity
- best effort services
- unreliability

Simplicity means that the routers that interconnect the links mainly act as forwarding devices. That is, they send IP packets to the next hop without performing any additional tasks. Routing means determining the next hop for a set of IP addresses and entering the result in the routing table. It is only rarely performed - e.g. periodically.

Best effort services imply that there is no guaranteed level of QOS, that is, neither a maximum delay nor a minimum throughput are guaranteed.

IP-networks are "unreliable" in the sense that there are no agreements on a level of reliability that must be guaranteed. A good level of reliability is often achieved through networks that are oversized for normal traffic and thus can absorb traffic peaks.

Due to the design of such an IP-network the main cause of congestion are traffic peaks. That is, more IP-packets must be transported at a certain time than the system can take. Usually it is assumed that the bandwidth is the bottleneck not the router.

When congestion occurs routers throw away IP-packets. They have no possibility to select packets that belong to a special TCP (or UDP) connection. The loss of packets is detected on the receiving end by TCP or another higher level protocol, like UDP. TCP reacts by reducing the window size and thus the traffic rate. This implies a loss of quality, which may be prohibitive with real time applications.

A router detects congestion when it discards packets or, possibly, when there are more packets in the buffers than a given threshhold The congested router then sends "source quench messages" to the host address to which the discarded IP-packet belonged. At the host, TCP may or may not react by reducing the window size just as if it had detected packet loss. Source quench messages are ICMP-messages and thus could be interpreted by the neighboring routers. However, a simple "forwarding device" has no means to relieve an adjacent router from traffic even it detects congestion.

TCP is run only at the end systems. Congestion control in a classic IP-network is therefore end-to-end control. The effected system parts have no possibility for self-defense other than discarding packets.

### 1.2 Congestion Control and MPLS

With the introduction of MPLS (multi protocol label switching) more efficient and more direct methods to control congestion become possible.

### 1.2.1 What is MPLS?

MPLS is a protocol directly below IP in the protocol stack. Routers that run MPLS are called "label switched routers" (LSR).

In a IP-subnet with label switched routers (LSRs) IP-packets are "switched" rather than forwarded. IP-Packets that must go from one router on one side of the subnet to another "label edge router" on the other side are directed along a predetermined path through the network. To that purpose they are grouped together in forwarding equivalence classes (FEC).

Packets belonging to a FEC are labeled. That is, at ingress the IP-packets are classified based on a combination of the information carried in the IP header and the local routing information maintained by the "label edge router" (LER). An MPLS-header with a label is then inserted for each packet. Within the MPLS-capable domain, each LSR will use the label to look up its forwarding table and forward the packet accordingly. The incoming label is replaced by the outgoing label. Inside the MPLS-capable subnet IP is not involved in forwarding packets. At egress of the MPLS-domain the MPLS-header is removed.

A label may, for example, correspond to an ATM cell header. The resulting mechanism is an advanced forwarding scheme and extremely fast. But besides speed it makes load distribution possible. Packets that are directed towards the same router at the other end of an MPLS-domain may be grouped in different FEC and hence go through different paths. This also opens the field for path control, since entire FEC or parts of an FEC may be deviated at an intermediate stage by relabeling or altering the forwarding table.

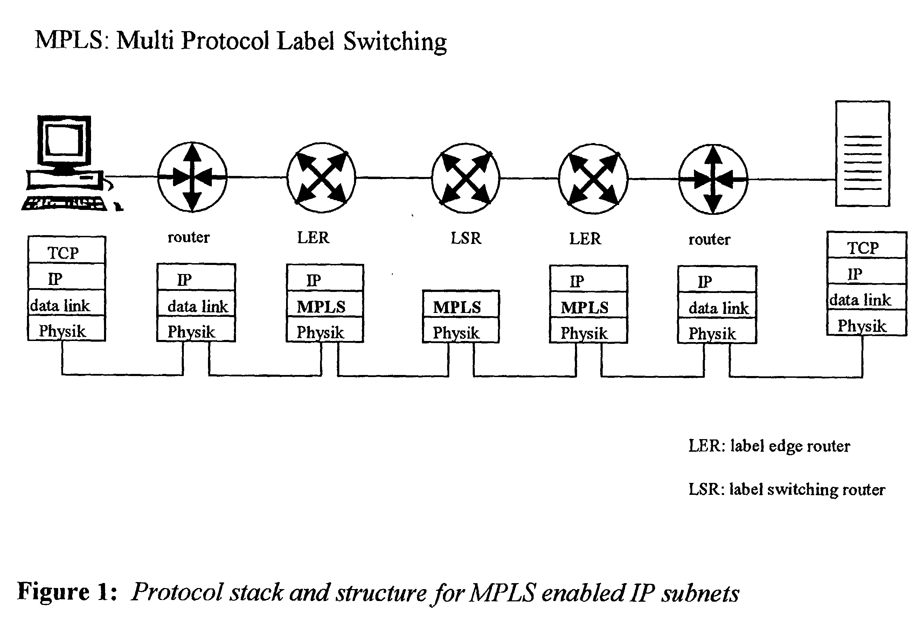

**Figure 1 shows a** Protocol stack and structure for MPLS enabled IP subnets

MPLS uses signaling protocols to set up the paths. Examples are the Resource Reservation Protocol (RSVP) or the Label Distribution Protocol (LDP).

Before setting up a path it must be found. This may be achieved by constrained-based routing (CBR). CBR computes routes that are subject to constraints besides the network topology. An important example for such a constraint is bandwidth requirement. The constraints are compared to attributes that are assigned to each path. One of them is the reservable bandwidth (which is the (minimum of) of the reservable bandwidth of the links that are involved). Information about attributes is propagated within the MPLS-domain by an enhanced IGP (interior gateway protocol).

With online CBR, routers can compute label switched paths (LSP) at any given time. Offline CBR is performed by an offline server.

### 1.2.2 Congestion Control with MPLS - the Current Status: Congestion Avoidance

With MPLS and CBR paths can be selected in a way that bandwidth is used in an optimal way provided the network administrators has a clear idea of the traffic it may expect so that they can choose adequate attributes. Clearly, this is a weekness of the concept, since network administrators, as a rule, cannot have this insight. They can update "reoptimize" the selection of the paths (LSP rerouting). However, this is not a dynamic process but must be triggered manually or may, perhaps, be executed periodically.

Thus, at this point, congestion control in MPLS-capable networks means congestion prevention. An attempt is made to wisely set up multiple paths between routers and then share the load among these paths according to the traffic expected. There are no mechanisms to dynamically adapt to congestion. The only exception is link failure. Reoptimization of LSPs can be triggered by link failure. The traffic is then routed along backup LSPs.

### 2 ACCIP: Automatic Congestion Control in MPLS-enabled IP-Networks - a Proposal

The following proposal aims at introducing dynamic congestion control within an MPLS-capable IP-subnet. When congestion cannot be prevented by wisely setting up paths, the mechanism below reacts to congestion by redirecting traffic along alternative paths. To avoid cumbersome sentences we call it ACCIP (automatic congestion control in IP-networks). ACCIP is quick, because no alternative routes need to be computed. When the overload ceases the system returns to its original state, that is, the paths remain unchanged.

Thus, ACCIP is suitable to react to short term load changes and traffic peaks. In such a situation rerouting is not desirable - even if it one could achieve it in time - because the peak does not represent a typical load situation.

It also shifts the focus from pure link congestion to a combination of router congestion and link congestion.

Routers can also be congested. E.g. router capacity can be reduced when
- banning "hot potato" routing,
- routing/forwarding tables are complex,
- routers administrate many paths,
- routers are busy computing routing tables,
- routers are busy computing/ determining LSPs.

### 2.1 A Dynamic Procedure to Adapt Network Utilization in Case of Router or Link Congestion

In the following section we suggest a mechanism that determines congestion and automatically reacts to it.

The ACCIP mechanism consists of 4 major steps
1. Overload is detected and evaluated. Either a router itself experiences overload or it detects overload at outgoing links.
2. The routers adjacent to a router that has detected overload are informed.
3. The neighbouring nodes interpret the information.
4. The neighbouring routers react by redirecting traffic.

There are numerous ways how steps 1 to 4 can be achieved. We now work out suggestions for each step.

### 2.1.1 Step 1: Overload detection and evaluation

- Each router (LSR) determines its load state and incoming queues by observing central processor load, main queues etc.
- Each router observes outgoing queues to detect link congestion.
- An overload level for the router capacity is computed, for example, with an algorithm comparable to the STATOR algorithm in EWSD [5].
- Link congestion levels are computed if link congestion is detected.
- For both cases, a suitable choice of levels could be: 0-7 (4 bits) e.g. 0-10 (8 bits).

### 2.1.2 Step 2: Information of adjacent routers

- The levels are sent to the neighbouring routers. This could be achieved through the so-called source quench message, an ICMP message that is currently used to sent congestion information to the source host of a discarded IP-packet. At this point quench messages are only interpreted by TCP at the source host of the discarded IP-packet. However, quench messages are ICMP messages and hence an integral part of IP. Therefore they can be interpreted by routers.
- Another possibility to exchange congestion information is through IGP, the Interior Gateway Protocol. This however may cause a flood of information transfer. (IGP floods information within an administrative domain.)
- Link congestion level should be sent together with the labels of the incoming traffic that goes towards that link. Thus the adjacent node can determine which traffic causes the overload.
- The neighboring routers receive the quench messages and extract the congestion information.
- They do not further propagate the congestion information. Otherwise loops might occur.

### 2.1.3 Interpretation of information at adjacent nodes

- Information transfer is never perfect. There are delays or messages containing congestion information may even be lost. Also, due to the fractal nature of IP traffic, changes in congestion may be rather abrupt. We therefore suggest to use algorithms as described in [1] to reconstruct the congestion at the neighbor from the transfered levels and to smoothen strong oszillations. One of these algorithms evaluates all congestion levels received in a certain time period. The result is once again mapped to congestion levels, that will be used to determine an appropriate reaction. These "reaction levels" need not assume the same values as the transfered congestion levels. E.g. transfered congestion levels 0-7 could be mapped on reaction levels 0-8.
- Link congestion levels must be treated differently from router congestion levels. When a router itself is congested, all traffic directed to that router causes overload. If an outgoing link at a router is congested, only traffic that would go through that link would cause overload and must be deviated.

### 2.1.4 Step 4: Traffic redirection at adjacent nodes

Steps 1 to 3 have not made use of MPLS. MPLS allows to redirect fractions of a certain traffic flow through alternative paths and thus to achieve a load distribution. Classic rerouting would redirect all the traffic through one alternative path, which is not desirable in this scenario.
- In case of link congestion, the router that detected it, may itself deviate a suitable portion of the traffic on that link along an alternative path. That portion may correspond to the link congestion level . Thus the overload situation might be cured before load reduction at the neighbours is necessary.
- The neighbours try to reduce the traffic to the congested router by a certain percentage corresponding to the reaction level (e.g. 0 - 0%, 1 - 10%, 2 -20% ,.., 10-100%). That is, each neighbour forwards that percentage of packets along an alternative LSPs. Alternative routes/paths must be computed whenever an LSP is computed.
   In case of link congestion, only traffic that is destined to go through that link must be deviated. Note that alternative paths for link congestion and router congestion could differ.
- Delay sensitive traffic such as real time traffic should not be redirected to avoid further delays and jitter. It should be labeled differently at the ingress router. Thus the routers adjacent to a congested router can distinguish between delay sensitive traffic that is forwarded as usual and insensitive traffic that may be redirected. A further option is to mark low priority traffic (e.g. from low paying customers) that could even be discarded when there is an absolute surplus of traffic.
   To achieve this, the ingress router must have additional functionalities beyond basic forwarding and routing. It must be able to interpret some information from higher level protocols such as UDP and TCP (e.g. port numbers).
- It makes sense to allow alternative paths not to meet all the requirements the first choice path must meet. E.g. an alternative path may have less bandwidth. This is admissible because it probably will never carry the full traffic of the first choice path. In addition there may be multiple alternative paths over which the traffic can be distributed.
- Packets may not be redirected through an alternative path where the next hop is also a congested router. This also handles the problem of a congested router on an alternative path 2 hops away. The intermediate router will see filling outgoing queues to that router and hence link congestion. Congestion further down the path will not be seen, because congestion levels may not be propagated further through the network.
- When the congestion situation changes the neighbors automatically adapt to it by adjusting the percentage of redirected traffic. When congestion ceases the traffic returns completely to the first choice path.
- Especially with a smoothing procedure as in [1] and a ban on redirection along congested paths, it is unlikely that hectic redirecting of traffic causes instability or considerable load in itself. If it is occurs nonetheless, we suggest a timer to delay reactions. A good value for that timer must be determined.

Clearly this proposal relies on several underlying assumptions: We assume that the overall network capacity in the MPLS domain is sufficient. That is, singular routers or links may be congested, while the system as a whole can handle the traffic. This assumption may be weakened by marking, at ingress, low priority traffic that may be discarded instead of being redirected.

The congestion is caused by short term changes in the traffic distribution and is treated by short term adaptations of the paths which will be undone when the "normal" traffic situation is reestablished. An alternative paths must exist, otherwise the network cannot react to congestion. The choice of MPLS paths in a "normal" traffic situation is assumed to be appropriate. Otherwise it should be changed on a long term basis by rerouting.

ACCIP uses MPLS as a means to quickly redirect traffic portions along alternative paths. Any protocol or enhancement of existing protocols that provides this service in an IP network could be encorporated in the automatic congestion control algorithm suggested in this paper. However, at present, MPLS is the only such mechanism known to the authors.

The ACCIP makes most sense among peer entities, that is in a non-hierarchical network. In a hierarchical system, routers among which automatic congestion control with MPLS seems desirable, could be grouped together and marked with the "color" label known for CBR.

Information exchange is restricted to immediate neighbours in order to keep the complexity of the algorithm down. Therfore, it may not adapt optimally to each load situation, but it allows fast reaction.

### 2.2 Example for Network Constellation

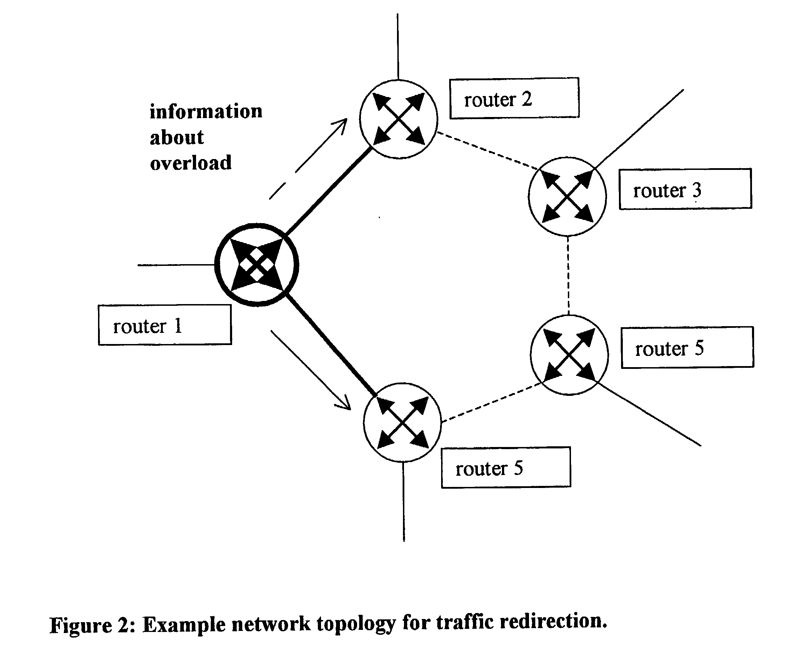

**Figure 2 shows an** Example network topology for traffic redirection. The default route from router 2 to 5 is through router 1 - and vice versa (fat line). Router 1 experiences overload. It informs its neighbours, routers 2 and 5. Router 2 can then deviate traffic directed to router 5 by using an alternative route (dashed line) through routers 3 and 4.
Likewise router 5 can spare router 1 by going through routers 5 and 4.

### 3 Glossary and References

| **Glossary** | |
|---|---|
| ACCIP | automatic congestion control in IP-networks |
| CBR | constrained-based routing |
| FEQ | forwarding equivalence class |
| ICMP | Internet control message protocol |
| IGP | interior gateway protocol - an internet protocol that propagates routing information to routers within one administrative domain |
| IP | Internet protocol |
| LDP | label distribution protocol |
| LER | label edge router - LSR at the edge of a MPLS enabled IP-subnet |
| LSP | label switched path - path along which packets are "switched" through an MPLS enabled IP-subnet |
| LSR | label switched router - MPLS enabled router |
| MPLS | multi protocol label switching |
| RFC | request for comment |
| RSVP | resource reservation protocol |
| TCP | transmission control protocol |
| UDP | user datagram protocol |

### References

[1] International patent pending WO 99/38341, July, 27 1999
[2] European patent pending EP 0 932 313 Al, July, 28 1999
[3] RFC 792, *Internet Control Message Protocol*
[4] RFC 896, *When to send an ICMP Source Quench*
[5] Daisenberger, Oehlerich and Wegmann, *Two concepts for overload regulation in SPC switching systems: STATOR and Tail,* Telecommunication Journal, May 1988, pp. 306-313

## Claims

1. A method for congestion control within an IP-subnetwork, said IP-subnetwork including a plurality of routers for routing traffic through said IP-subnetwork, said method including the steps of
- a router detecting overload,
- said router informing a neighbouring router of said overload,
- said neighbouring router interpreting said overload information and determining an appropriate reaction to reduce said overload,
- said neighbouring router executing said appropriate reaction.

2. A method as defined in claim 1, wherein said appropriate reaction is executed by redirecting fractions of a certain traffic flow through alternative paths.

3. A Router within an IP-subnetwork,
said router including
- detecting means for detecting overload,
- informing means for informing a neighbouring router of said overload.

4. A Router within an IP-subnetwork,
said router including
- controlling means for interpreting overload information received from a neigbouring router and for determining an appropriate reaction to reduce said overload,
- executing means for executing said appropriate reaction.

5. The Router as defined in claim 4,
wherein said executing means are executing said appropriate reaction by redirecting fractions of a certain traffic flow through alternative paths.
